# EUROPÄISCHE PATENTANMELDUNG

(11) **EP 1 482 234 A1**
(43) Veröffentlichungstag der Anmeldung: **01.12.2004**
(21) Anmeldenummer: 04006148.3
(22) Anmeldetag: 16.03.2004
(51) Int. Cl.: F16L 55/11, F16L 55/115, B60G 11/30

(54) **Druckdichter Verschluss für das Endstück eines Schlauches**

(30) Priorität: 28.05.2003 DE 10324162
(71) Anmelder: ContiTech Schlauch GmbH, 30165 Hannover (DE)
(72) Erfinder: Brühne, Klaus, 34497 Korbach (DE); Pohlmann, Reinhard, 34497 Korbach (DE)
(74) Vertreter: Finger, Karsten

(57) **Zusammenfassung**

Die Erfindung betrifft einen druckdichten Verschluss (1) für das Endstück (2) eines Schlauches aus einem Einsatzteil (3) und einem Aufsatzteil (4). Das Einsatzteil (3) weist eine umlaufende Dichtfläche (5) auf und ist derart in die Öffnung des Schlauchendstücks (2) einfügbar, dass das Schlauchendstück (2) mit seinem die Öffnung bildenden ringförmigen Wandabschnitt (6) vollflächig auf die Dichtfläche (5) drückbar ist. Das Aufsatzteil (4) ist zur Bildung des druckdichten Verschlusses (1) mit dem Einsatzteil (3) verbindbar, derart, dass wenigstens ein umlaufender Abschnitt (7) der Innenwand des Aufsatzteils (4) den ringförmigen Wandabschnitt (6) des Schlauchendstücks (2) auf die Dichtfläche (5) drückt. Der Außendurchmesser des Einsatzteils (3) ist im Bereich der Dichtfläche (5) kleiner als der Innendurchmesser des Schlauchendstücks (2). Der Verschluss (1) aus Einsatzteil (3) und Aufsatzteil (4) weist keinen größeren Außendurchmesser als das Schlauchendstück (2) auf.

## Beschreibung

Die Erfindung betrifft einen druckdichten Verschluss für das Endstück eines Schlauches.

Druckdichte Verschlüsse für Schlauchendstücke sind aus verschiedenen Anwendungsbereichen bekannt.

So ist aus der DE-PS 1 089 151 ein Verfahren zur Herstellung von Schlauchkrümmem bekannt, bei dem die Schlauchrohlinge in ein Rohr von dem Außendurchmesser der fertigen Schlauchkrümmer entsprechender lichter Weite eingezogen, an beiden Enden abgedichtet und von innen mit einem Druckmittel beaufschlagt werden. Das Rohr ist an beiden Enden durch aufgeschraubte oder mittels Bajonettfassung aufgesteckte Verschlusskappen abgeschlossen. Die Abdichtung des Schlauchrohlings erfolgt dadurch, dass der Schlauchrohling in das Rohr eingelegt und zwischen konisch zur nächst liegenden Verschlusskappe hin geweiteten Dichtflächen an den Verschlusskappen derart eingeklemmt wird, dass er gleichzeitig nach außen abgedichtet ist.

Eine derartige beidseitige Abdichtung des Schlauches hat den Nachteil, dass der abgedichtete Schlauch nicht in Hohlräume einbringbar ist, deren Innendurchmesser nur geringfügig größer ist als der Außendurchmesser des Schlauches. Darüber hinaus lässt sich der abgedichtete Schlauch nicht mehr verformen, da seine Form bereits durch das verwendete Rohr vorgegeben ist.

Ausgehend von diesem Stand der Technik liegt der Erfindung die Aufgabe zugrunde, einen druckdichten Verschluss für das Endstück eines Schlauches bereitzustellen, welcher es erlaubt, das abgedichtete Schlauchendstück in Hohlräume einzubringen, deren Innendurchmesser nur geringfügig größer ist als der Außendurchmesser des Schlauchendstückes.

Diese Aufgabe wird durch die in Anspruch 1 genannten Merkmale gelöst. Weiterbildungen und vorteilhafte Ausgestaltungen der Erfindung ergeben sich aus den Unteransprüchen und den Ausführungsbeispielen.

Der erfindungsgemäße druckdichte Verschluss für das Endstück eines Schlauches umfasst ein Einsatzteil und einem Aufsatzteil, wobei das Einsatzteil eine umlaufende Dichtfläche aufweist und derart in die Öffnung des Schlauchendstücks einfügbar ist, dass das Schlauchendstück mit seinem die Öffnung bildenden ringförmigen Wandabschnitt vollflächig auf die Dichtfläche drückbar ist, und wobei das Aufsatzteil zur Bildung des druckdichten Verschlusses mit dem Einsatzteil verbindbar ist, derart, dass wenigstens ein umlaufender Abschnitt der Innenwand des Aufsatzteils den ringförmigen Wandabschnitt des Schlauchendstückes auf die Dichtfläche drückt, wobei der Außendurchmesser des Einsatzteils im Bereich der Dichtfläche kleiner als der Innendurchmesser des Schlauchendstückes ist und der Verschluss aus Einsatzteil und Aufsatzteil keinen größeren Außendurchmesser als das Schlauchendstück aufweist.

Ein derart erfindungsgemäßer druckdichter Verschluss erlaubt das Einbringen des abgedichteten Schlauchendstücks in Hohlräume, deren Innendurchmesser nur geringfügig größer ist als der Außendurchmesser des Schlauchendstückes.

Eine Weiterbildung der Erfindung sieht vor, dass das Aufsatzteil mit dem Einsatzteil durch Klemmen oder Verpressen unlösbar und/oder durch geeignete Befestigungsmittel, insbesondere Schrauben, lösbar mit dem Einsatzteil verbunden ist.

Anstelle durch Klemmen oder Verpressen können das Aufsatzteil und das Einsatzteil aber auch durch andere Verbindungstechniken, insbesondere Kleben, Schweißen oder Löten, verbunden sein.

Weiterhin ist vorgesehenen, dass die Dichtfläche und/oder der umlaufende Abschnitt wenigstens einen Vorsprung aufweisen.

Durch den Vorsprung wird erreicht, dass das Schlauchendstück auch bei sehr hohen, im Schlauch auftretenden Drücken sicher im Verschluss gehalten wird und der Verschluss nicht undicht wird.

Eine vorteilhafte Ausgestaltung der Erfindung sieht vor, dass das Einsatzteil und/oder das Aufsatzteil wenigstens eine Bohrung zum Hohlraum des Schlauchendstücks aufweisen.

Die Bohrung dient als Anschlussmöglichkeit weiterer Vorrichtungen. Beispielsweise können durch die Bohrung gasförmige, flüssige und/oder feste Stoffe in den Hohlraum des Schlauches eingebracht werden.

Die Erfindung betrifft außerdem einen Schlauchspeicher aus einem Schlauch, dessen Endstücke beidseitig mit einem der vorgenannten, druckdichten Verschlüssen versehenen sind.

Ein derart ausgebildeter Schlauchspeicher lässt sich problemlos in Hohlräume einbringen, deren Innendurchmesser nur geringfügig größer ist als der Außendurchmesser des Schlauchendstückes.

Ein derartiger Schlauchspeicher kann beispielsweise als Lufttank in einer Radaufhängung gemäß DE 39 09 916 A1 verwendet werden. Die DE 39 09 916 A1 offenbart eine Radaufhängung für luftgefederte Fahrzeuge mit einem Balg, der sein Volumen beim Einfedern verkleinert, und mit einem damit verbundenen Lufttank, der sein Volumen beim Einfedern im wesentlichen beibehält. Der Innenraum des radführenden Teils bildet in platzsparender Weise den Lufttank, wobei das radführende Teil mittels einer Dichtschicht geschlossen. Die Dichtschicht besteht aus einem Thermoplasten, einer Mischung von Thermoplasten oder aus einer Gummimischung.

Die in der DE 39 09 916 A1 beschriebenen Verfahren zur Herstellung der Radaufhängung sind hinsichtlich des Einbringens der Dichtschicht in den Innenraum des radführenden Teils kompliziert und aufwendig. Außerdem ist die Zahl möglicher Ausgestaltungen der Dichtschicht, insbesondere hinsichtlich ihrer Festigkeit, begrenzt.

Der erfindungsgemäße Schlauchspeicher kann dagegen problemlos in das radführende Teil eingebracht werden, wobei die Ausgestaltung des Schlauchspeichers den vorgegebenen Anforderungen entsprechend angepasst ist. Vorzugsweise ist der Schlauchspeicher daher in einem Rohr angeordnet und mit Druck beaufschlagbar, wobei die Enden des Rohres derart mit geeigneten Verschlussstücken versehen sind, dass eine Längsdehnung des Schlauchspeichers bei Druckbeaufschlagung verhindert wird.Der erfindungsgemäße Schlauchspeicher zeichnet sich einerseits durch seine Dichtheit, andererseits durch seine Passgenauigkeit beim Einbringen in den Hohlraum aus, welche durch die Verwendung der zuvor genannten erfindungsgemäßen Verschlüsse erreicht werden.

Die Herstellung des Schlauchspeichers ist einfach und kostengünstig, wobei die Dichtheit des Schlauchspeichers gewährleistet ist.

Nachfolgend wird die Erfindung anhand mehrerer Ausführungsbeispiele erläutert, die in der Zeichnung dargestellt sind. In dieser zeigen:
- Fig. 1: einen Längsschnitt eines schematisch dargestellten Verschlusses mit Schlauchendstück,
- Fig. 2: einen Längsschnitt eines weiteren schematisch dargestellten Verschlusses mit Schlauchendstück,
- Fig. 3: einen Längsschnitt eines weiteren schematisch dargestellten Verschlusses mit Schlauchendstück,
- Fig. 4: einen Längsschnitt eines weiteren schematisch dargestellten Verschlusses mit Schlauchendstück,
- Fig. 5: einen Längsschnitt eines schematisch dargestellten Schlauchspeichers mit lösbarem Verschluss und einseitiger Befüllmöglichkeit,
- Fig. 6: einen Längsschnitt eines schematisch dargestellten Schlauchspeichers mit Anschluss in einem Rohrhohlraum eines Kraftfahrzeugs und
- Fig. 7: das Zusammensetzen eines Verschlusses am Schlauchendstück in vier Schaubildern.

In allen Figuren sind gleiche Teile mit gleichen Bezugszeichen versehen.

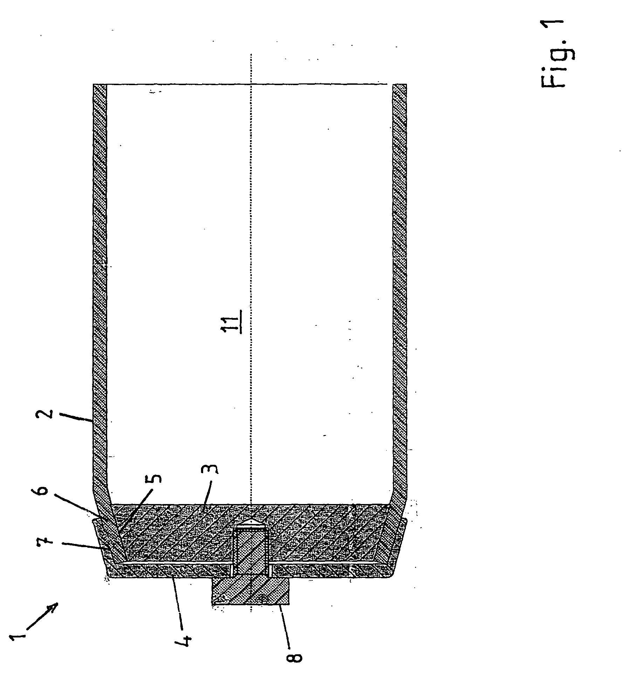

In Fig. 1 ist ein Längsschnitt eines schematisch dargestellten Verschlusses 1 mit Schlauchendstück 2 dargestellt. Der druckdichte Verschluss 1 für das Endstück 2 des Schlauches umfasst ein Einsatzteil 3 und ein Aufsatzteil 4.

Das Einsatzteil 3 ist als eine im Querschnitt kreisförmige Dichtplatte nach Art eines flachen Kegelstumpfs ausgebildet, wobei die Mantelfläche des Einsatzteils 3 eine umlaufende Dichtfläche 5 darstellt. Das Einsatzteil 3 ist derart in die Öffnung des Schlauchendstücks 2 eingefügt, dass das konisch verjüngende Ende des Einsatzteils 3 zur Öffnung des Schlauchendstücks 2 weist und das Schlauchendstück 2 mit seinem die Öffnung bildenden ringförmigen Wandabschnitt 6 vollflächig auf die Dichtfläche 5 drückbar ist. Der Außendurchmesser des Einsatzteils 3 ist im Bereich der Dichtfläche 5 kleiner als der Innendurchmesser des Schlauchendstückes 2 ist.

Das Aufsatzteil 4 ist zur Bildung des druckdichten Verschlusses 1 als eine konisch aufgeweitete, im Querschnitt kreisförmige Kappe ausgebildet und durch eine Schraube 8 mit dem Einsatzteil 3 lösbar verbunden. Zu diesem Zweck weisen Einsatzteil 3 und Aufsatzteil 4 ein zentral angeordnetes, fluchtendes Muttergewinde für die Schraube 8 auf. Die Kappe ist derart mit seiner offenen, konisch aufgeweiteten Seite auf dem Schlauchendstück 2 angeordnet und mit dem Einsatzteil 3 verschraubt, dass ein umlaufender Abschnitt 7 der Innenwand des Aufsatzteils 4 den ringförmigen Wandabschnitt 6 des Schlauchendstückes 2 auf die Dichtfläche 5 drückt, wodurch der druckdichte Verschluss 1 entsteht. Der Verschluss 1 aus Einsatzteil 3 und Aufsatzteil 4 weist keinen größeren Außendurchmesser als das Schlauchendstück 2 auf.

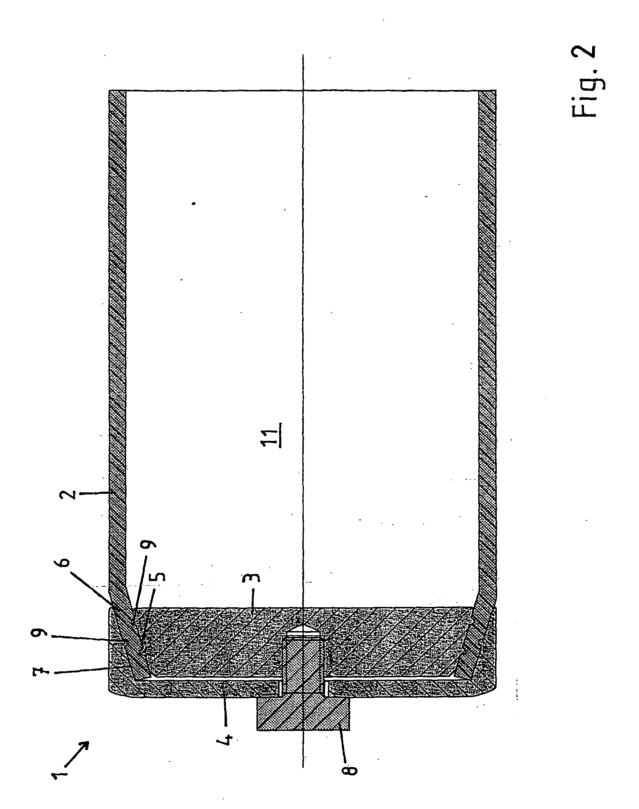

In Fig. 2 ist ein Längsschnitt eines weiteren schematisch dargestellten Verschlusses 1 mit Schlauchendstück 2 dargestellt.

Der in Fig. 2 dargestellte Verschluss 1 weist alle Merkmale des in Fig. 1 dargestellten Verschlusses 1 auf, so dass insofern auf die Beschreibung zur Fig. 1 verwiesen werden kann.

Zusätzlich weisen die Dichtfläche 5 des Einsatzteils 3 und der umlaufende Abschnitt 7 des Aufsatzteils 4 Vorsprünge 9 auf. Durch diese Vorsprünge 9 wird erreicht, dass das Schlauchendstück 2 auch bei sehr hohen, im Schlauch auftretenden Drücken sicher im Verschluss 1 gehalten wird und der Verschluss 1 nicht undicht wird.

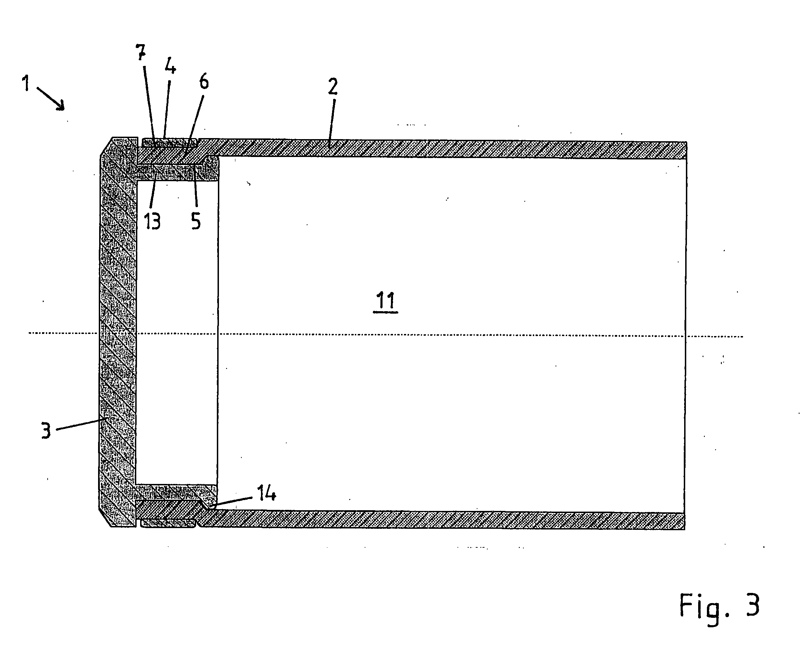

In Fig. 3 ist ein Längsschnitt eines weiteren schematisch dargestellten Verschlusses 1 mit Schlauchendstück 2 dargestellt. Der druckdichte Verschluss 1 für das Endstück 2 des Schlauches umfasst ein Einsatzteil 3 und ein Aufsatzteil 4.

Das Einsatzteil 3 ist als einseitig offener Ring 13 ausgebildet, wobei die eine Seite des Ringes 13 durch eine stoffschlüssige Verbindung mit einer im Querschnitt kreisförmigen Platte verschlossen ist, deren Außendurchmesser größer als der Außendurchmesser des Ringes 13, aber gleich dem Außendurchmesser des Schlauchendstücks 2 ist. Der Ring 13 weist außerdem an seiner offenen Seite einen radial nach außen gerichteten Kragen 14 auf, dessen Außendurchmesser dem Innendurchmesser des Schlauchendstücks 2 entspricht. Die Außenfläche des Ringes 13 stellt eine umlaufende Dichtfläche 5 dar. Das Einsatzteil 3 ist mit seiner offenen Seite derart in die Öffnung des Schlauchendstücks 2 eingefügt, dass das Schlauchendstück 2 an die dem Schlauchendstück 2 zugewandte Stirnseite der Platte anstößt und mit seinem die Öffnung des Schlauchendstücks 2 bildenden ringförmigen Wandabschnitt 6 vollflächig auf die Dichtfläche 5 drückbar ist. Der Außendurchmesser des Einsatzteils 3 ist im Bereich der Dichtfläche 5 kleiner als der Innendurchmesser des Schlauchendstückes 2.

Das Aufsatzteil 4 ist zur Bildung des druckdichten Verschlusses 1 als Ring ausgebildet und durch Verpressen auf dem Einsatzteil 3 unlösbar befestigt. Hierzu ist der Ring über dem auf der Dichtfläche 5 angeordneten Schlauchendstück 2 positioniert und radial nach innen verformt, wobei der umlaufende Innenwandabschnitt 7 des Ringes 4 den ringförmigen Wandabschnitt 6 des Schlauchendstückes 2 auf die Dichtfläche 5 drückt. Der dadurch gebildete druckdichte Verschluss 1 aus Einsatzteil 3 und Aufsatzteil 4 weist keinen größeren Außendurchmesser als das Schlauchendstück 2 auf.

Durch den an der offenen Seite des Ringes 13 angeordneten, radial nach außen gerichteten Kragen 14 wird erreicht, dass das Schlauchendstück 2 auch bei sehr hohen, im Schlauch auftretenden Drücken sicher im Verschluss 1 gehalten wird und der Verschluss 1 nicht undicht wird.

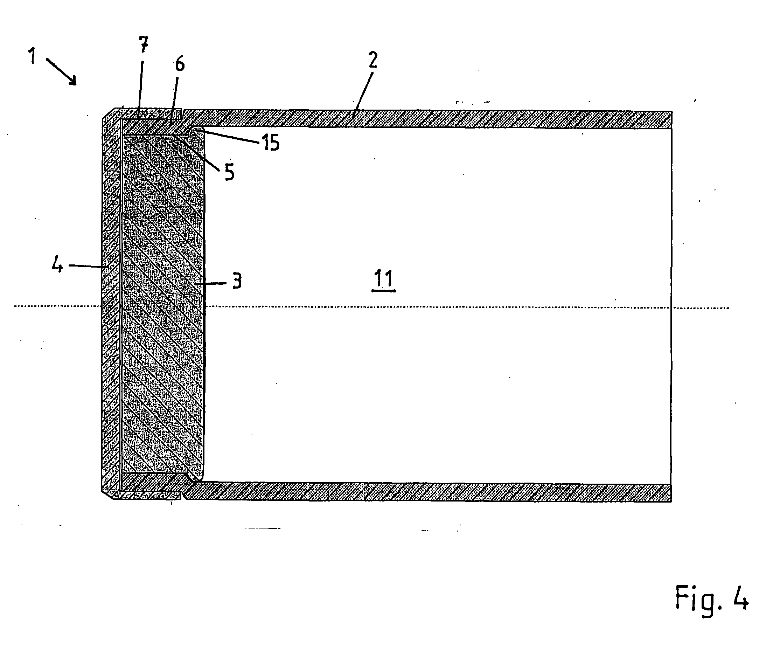

In Fig. 4 ist ein Längsschnitt eines weiteren schematisch dargestellten Verschlusses 1 mit Schlauchendstück 2 dargestellt. Der druckdichte Verschluss 1 für das Endstück 2 des Schlauches umfasst ein Einsatzteil 3 und ein Aufsatzteil 4.

Das Einsatzteil 3 ist als im Querschnitt kreisförmige Platte ausgebildet, die an einer Stirnseite einen radial nach außen gerichteten Kragen 15 aufweist, dessen Außendurchmesser dem Innendurchmesser des Schlauchendstücks 2 entspricht. Die Mantelfläche der Platte stellt eine umlaufende Dichtfläche 5 dar. Das Einsatzteil 3 ist mit seiner den Kragen 15 aufweisenden Seite derart in die Öffnung des Schlauchendstücks 2 eingefügt, dass das Schlauchendstück 2 mit seinem die Öffnung bildenden ringförmigen Wandabschnitt 6 vollflächig auf die Dichtfläche 5 drückbar ist. Der Außendurchmesser des Einsatzteils 3 ist im Bereich der Dichtfläche 5 kleiner als der Innendurchmesser des Schlauchendstückes 2.

Das Aufsatzteil 4 ist zur Bildung des druckdichten Verschlusses 1 als im Querschnitt kreisförmige Kappe ausgebildet und durch Verpressen unlösbar auf dem Einsatzteil 3 befestigt. Die Kappe ist hierzu mit seiner offenen Seite auf dem Schlauchendstück 2 angeordnet. Durch Verpressen der ringförmigen Seitenwand nach radial innen drückt der umlaufende Abschnitt 7 der Innenwand des Aufsatzteils 4 den ringförmigen Wandabschnitt 6 des Schlauchendstückes 2 auf die Dichtfläche 5, wodurch der druckdichte Verschluss 1 entsteht. Der Verschluss 1 aus Einsatzteil 3 und Aufsatzteil 4 weist keinen größeren Außendurchmesser als das Schlauchendstück 2 auf.

Durch den an der Platte angeordneten radial nach außen gerichteten Kragen 15 wird erreicht, dass das Schlauchendstück 2 auch bei sehr hohen, im Schlauch auftretenden Drücken sicher im Verschluss 1 gehalten wird und der Verschluss 1 nicht undicht wird.

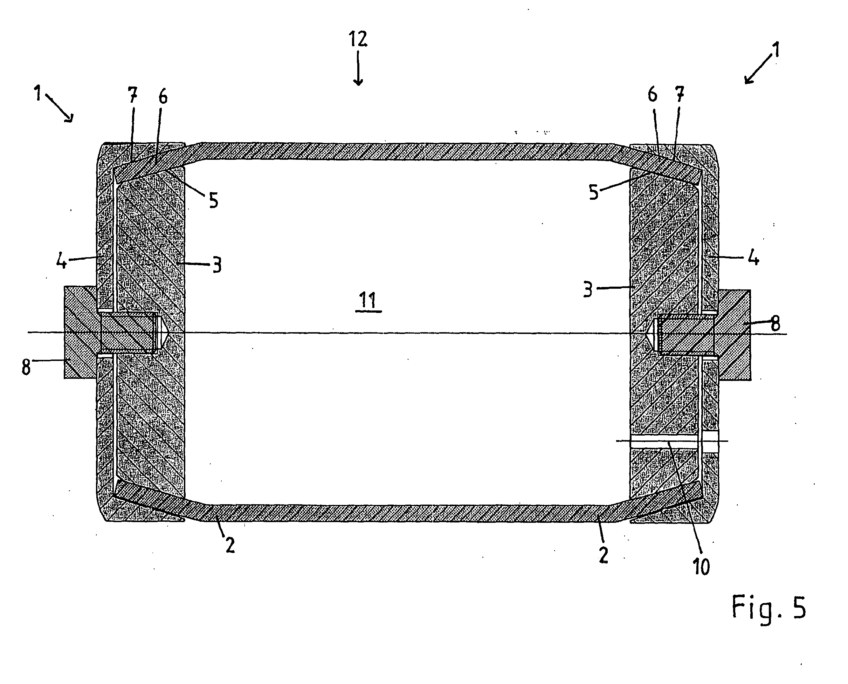

In Fig. 5 ist ein Längsschnitt eines schematisch dargestellten, erfindungsgemäßen Schlauchspeichers 12 mit lösbarem Verschluss 1 und einseitiger Befüllmöglichkeit dargestellt.

Der Schlauchspeicher 12 umfasst einen Schlauch, dessen Endstücke 2 beidseitig mit einem druckdichten Verschluss 1 versehenen sind.

Die in Fig. 5 dargestellten Verschlüsse 1 weisen jeweils alle Merkmale des in Fig. 1 dargestellten Verschlusses 1 auf, so dass insofern auf die Beschreibung zur Fig. 1 verwiesen werden kann.

Zusätzlich weisen das Einsatzteil 3 und das Aufsatzteil 4 des einen Verschlusses 1 eine Bohrung 10 zum Hohlraum 11 des Schlauchendstücks 2 auf. Eine derartige Bohrung 10 ermöglicht den Anschluss einer Befüllvorrichtung, durch die der Schlauchspeicher 12 mit gasförmigen, flüssigen und/oder festen Medien auch unter Druck befüllt werden kann.

Es ist deutlich zu erkennen, dass die Verschlüsse 1 keinen größeren Außendurchmesser als die Schlauchendstücke 2 haben.

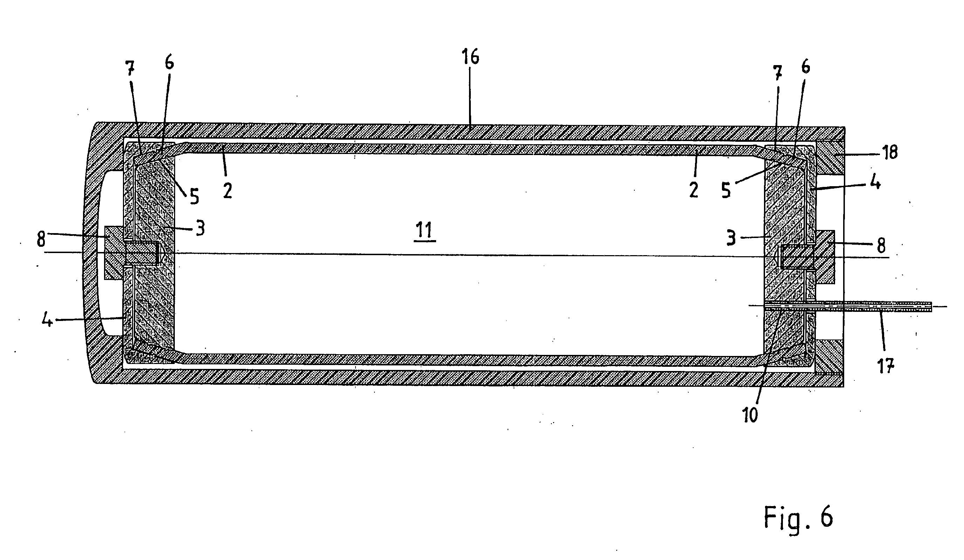

Fig. 6 zeigt einen Längsschnitt eines schematisch dargestellten Schlauchspeichers 12 mit Anschluss in einem Rohrhohlraum eines Kraftfahrzeugs.

Der in Fig. 2 dargestellte Schlauchspeicher 12 weist alle Merkmale des in Fig. 5 dargestellten Schlauchspeichers 12 auf, so dass insofern auf die Beschreibung zur Fig. 5 verwiesen werden kann.

Der Schlauchspeicher 12 ist in dem Hohlraum eines Rohres 16 angeordnet, wobei der Schlauchspeicher 12 den im Hohlraum zur Verfügung stehenden Platz optimal ausnutzt. Dies ist darauf zurückzuführen, dass die Verschlüsse 1 aus Einsatzteil 3 und Aufsatzteil 4 keinen größeren Außendurchmesser als die Schlauchendstücke 2 bzw. der Schlauch aufweisen.

Ein derartiger Schlauchspeicher 12 kann beispielsweise als Lufttank in dem Rohrhohlraum einer Radaufhängung für luftgefederte Fahrzeuge, wie sie in DE 39 09 916 A1 beschrieben wird, verwendet werden. Die in Fig. 6 nicht näher dargestellte Radaufhängung umfasst einen Balg, der sein Volumen beim Einfedern verkleinert, und einen damit verbundenen Lufttank in Form des Schlauchspeichers 12 , der sein Volumen beim Einfedern im wesentlichen beibehält.

Die Verbindung zwischen Balg und Schlauchspeicher 12 erfolgt über eine Leitung 17, die in die Bohrung 10 eingefügt ist. Über diese Leitung 17 ist der im Rohr 16 angeordnete Schlauchspeicher 12 auch mit Druck beaufschlagbar, wobei die Enden des Rohres 16 derart mit geeigneten Verschlussstücken 18 versehen sind, dass eine Längsdehnung des Schlauchspeichers 12 bei Druckbeaufschlagung verhindert wird.

Da der Schlauchspeicher 12 üblicherweise aus einem Material mit oder ohne Festigkeitsträger besteht, welches sich bei Druckbeaufschlagung ausdehnt, kann sich der Schlauchspeicher 12 dem Hohlraum des Rohres 16 sehr gut anpassen. Hierbei wird besonders vorteilhaft die Stabilität des Rohres 16 zur Erhöhung der Druckfestigkeit des Schlauchspeichers 12 genutzt.

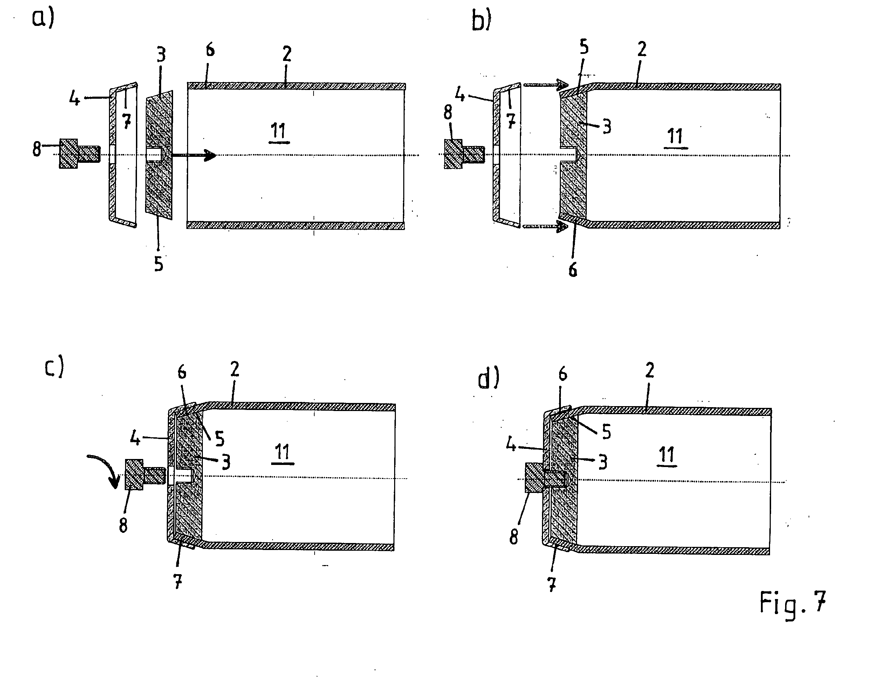

In Fig. 7 ist das Zusammensetzen eines Verschlusses 1 am Schlauchendstück 2 in vier Schaubildern a), b), c) und d) dargestellt, wobei der in Fig. 7 dargestellte Verschluss 1 alle Merkmale des in Fig. 1 dargestellten Verschlusses 1 aufweist, so dass insofern auf die Beschreibung zur Fig. 1 verwiesen werden kann.

Schaubild a) zeigt im Längsschnitt alle zur Bildung des Verschlusses 1 am Schlauchendstück 2 erforderlichen Teile, nämlich das Schlauchendstück 2, das Einsatzteil 3 als eine im Querschnitt kreisförmige Dichtplatte nach Art eines flachen Kegelstumpfs, das Aufsatzteil 4 als eine konisch aufgeweitete, im Querschnitt kreisförmige Kappe und die Schraube 8 als Befestigungselement.

Das Einsatzteil 3 und Aufsatzteil 4 weisen ein zentral angeordnetes, fluchtendes Muttergewinde für die Schraube 8 auf.

Im Schaubild b) ist das Einsatzteil 3 derart in die Öffnung des Schlauchendstücks 2 eingefügt, dass das konisch verjüngende Ende des Einsatzteils 3 zur Öffnung des Schlauchendstücks 2 weist und das Schlauchendstück 2 mit seinem die Öffnung bildenden ringförmigen Wandabschnitt 6 vollflächig auf der Mantelfläche des Einsatzteils 3 angeordnet ist, wobei die Mantelfläche des Einsatzteils 3 eine umlaufende Dichtfläche 5 darstellt.

Schaubild c) zeigt das Aufsatzteil 4, das zur Bildung des druckdichten Verschlusses 1 derart mit seiner offenen, konisch aufgeweiteten Seite auf dem Schlauchendstück 2 angeordnet ist, dass der umlaufender Abschnitt 7 der Innenwand des Aufsatzteils 4 über dem ringförmigen Wandabschnitt 6 des Schlauchendstückes 2 positioniert ist. Anschließend wird das Aufsatzteil 4 mit dem Einsatzteil 3 verschraubt, wobei Abschnitt 7 des Aufsatzteils 4 den Wandabschnitt 6 des Schlauchendstückes 2 auf die Dichtfläche 5 drückt.

Schaubild d) zeigt den fertig zusammengesetzten Verschluss 1.

### Bezugszeichenliste

### (ist Bestandteil der Beschreibung)

- 1: Verschluss
- 2: Schlauchendstück
- 3: Einsatzteil
- 4: Aufsatzteil
- 5: Dichtfläche
- 6: Wandabschnitt
- 7: Abschnitt der Innenwand
- 8: Befestigungsmittel
- 9: Vorsprung
- 10: Bohrung
- 11: Hohlraum
- 12: Schlauchspeicher
- 13: Rohr
- 14: Kragen
- 15: Kragen
- 16: Rohr
- 17: Leitung
- 18: Verschlussstück

## Patentansprüche

1. Druckdichter Verschluss (1) für das Endstück (2) eines Schlauches aus einem Einsatzteil (3) und einem Aufsatzteil (4), wobei das Einsatzteil (3) eine umlaufende Dichtfläche (5) aufweist und derart in die Öffnung des Schlauchendstücks (2) einfügbar ist, dass das Schlauchendstück (2) mit seinem die Öffnung bildenden ringförmigen Wandabschnitt (6) vollflächig auf die Dichtfläche (5) drückbar ist, und wobei das Aufsatzteil (4) zur Bildung des druckdichten Verschlusses (1) mit dem Einsatzteil (3) verbindbar ist, derart, dass wenigstens ein umlaufender Abschnitt (7) der Innenwand des Aufsatzteils (4) den ringförmigen Wandabschnitt (6) des Schlauchendstückes (2) auf die Dichtfläche (5) drückt, wobei der Außendurchmesser des Einsatzteils (3) im Bereich der Dichtfläche (5) kleiner als der Innendurchmesser des Schlauchendstückes (2) ist und der Verschluss (1) aus Einsatzteil (3) und Aufsatzteil (4) keinen größeren Außendurchmesser als das Schlauchendstück (2) aufweist.

2. Druckdichter Verschluss (1) nach Anspruch 1, **dadurch gekennzeichnet, dass** das Aufsatzteil (4) mit dem Einsatzteil (3) durch Klemmen oder Verpressen unlösbar und/oder durch geeignete Befestigungsmittel (8), insbesondere Schrauben, lösbar mit dem Einsatzteil (3) verbunden ist.

3. Druckdichter Verschluss (1) nach Anspruch 1 oder 2, **dadurch gekennzeichnet, dass** die Dichtfläche (5) und/oder der umlaufende Abschnitt (7) wenigstens einen Vorsprung (9) aufweisen.

4. Druckdichter Verschluss nach einem der Ansprüche 1 bis 3, **dadurch gekennzeichnet, dass** das Einsatzteil (3) und/oder das Aufsatzteil (4) wenigstens eine Bohrung (10) zum Hohlraum (11) des Schlauchendstücks (2) aufweisen.

5. Schlauchspeicher (12) aus einem Schlauch, dessen Endstücke (2) beidseitig mit einem druckdichten Verschluss (1) nach einem der Ansprüche 1 bis 4 versehenen sind.

6. Schlauchspeicher (12) nach Anspruch 5, **dadurch gekennzeichnet, dass** dieser in einem Rohr (16) angeordnet und mit Druck beaufschlagbar ist, wobei die Enden des Rohres (16) derart mit geeigneten Verschlussstücken (18) versehen sind, dass eine Längsdehnung des Schlauchspeichers (12) bei Druckbeaufschlagung verhindert wird.
